# EUROPÄISCHE PATENTSCHRIFT

(11) **EP 2 484 554 B1**
(45) Veröffentlichungstag und Bekanntmachung des Hinweises auf die Patenterteilung: **25.09.2019**
(21) Anmeldenummer: 11466040.0
(22) Anmeldetag: 20.12.2011
(51) Int. Cl.: B60Q 1/04

(54) **VORRICHTUNG ZUR BEFESTIGUNG EINES SCHEINWERFERS**
DEVICE FOR FASTENING A HEADLAMP
DISPOSITIF DE FIXATION D'UN PHARE

(30) Priorität: 21.12.2010 CZ 20100955
(43) Veröffentlichungstag der Anmeldung: 08.08.2012
(73) Patentinhaber: Skoda Auto A.S., 293 60 Mladá Boleslav (CZ)
(72) Erfinder: Parik, Petr, 29306 Kosmonosy (CZ)

(56) Entgegenhaltungen:
- EP-A1- 1 232 932
- EP-A2- 1 050 432
- FR-A1- 2 736 015

## Beschreibung

### Technisches Gebiet

Die Erfindung betrifft die Verbindung der Karosserieteile eines Kraftfahrzeuges, insbesondere dann die Verbindung des Scheinwerfers mit dem Frontend und dem Stoßfänger des Fahrzeuges.

### Bisheriger Stand der Technik

In derzeitiger Konstruktion der Karosserie von Kraftfahrzeugen bilden die Frontscheinwerfer einen integralen Bestandteil. Ihre Befestigung zur Fahrzeugkarosserie muss die Anforderungen nicht nur aus der Sicht der Funktionalität, sondern auch des Designs erfüllen, wo z.B. die Ausrichtung so gewährleistet sein muss, dass die Spaltgröße zwischen dem Scheinwerfer und den Karosserieteilen konstant bleibt. In der konstruktiven Ausführung der Befestigung des Scheinwerfers muss auch die Tatsache berücksichtigt werden, dass der Einbau der Aggregate im Motorraum eine komplette Baugruppe bildet, wo die Raummöglichkeiten im gewissen Maße die Ausführung der Befestigung vorherbestimmen. Eine klassische Befestigungsart stellen die Schraubverbindungen dar. Am Scheinwerfer sind Halter mit Öffnungen ausgebildet, mit deren Hilfe diese zu einzelnen Karosserieteilen befestigt sind. Damit der Scheinwerfer gegenüber der Öffnung in der Karosserie ausgerichtet werden kann, werden Einstellelemente eingesetzt (z.B. Boellhoff), welche die Ausrichtung des Scheinwerfers ermöglichen. Diese Befestigungsschraubpunkte verlängern jedoch die für den Einbau der Scheinwerfer benötigte Zeit. Eine nicht vernachlässigbare Rolle in den Gesamtkosten spielt auch deren Preis und nicht zuletzt auch das Gewicht. Weiter sind Lösungen bekannt, wo der Scheinwerfer am Fahrzeug mit verschiedenen Fixierungselementen befestigt ist.

Aus der Patentschrift DE 19741522 ist die Lösung bekannt, wo der Scheinwerfer in der Frontendöffnung mittels der am Frontendkörper angeordneten Führungskulissen und ferner mittels der am Scheinwerfer angeordneten Zapfen befestigt ist. Eine Montage des Scheinwerfers erfolgt in der Weise, dass dieser in die Frontendöffnung derart eingeschoben wird, damit die Zapfen in den Führungskulissen sich befinden.

Der Scheinwerfer wird dann in die Öffnung gegen die Fahrtrichtung des Fahrzeuges und danach in der Querrichtung eingeschoben. Dann wird er mit einer Befestigungsschraube fixiert. Um das Spiel zwischen der Führungskulisse und dem Zapfen einzustellen, können in den Führungskulissen federnde Zungen eingebaut werden, welche das vorhandene Spiel zwischen den Zapfen und der Führungskulisse ausgleichen. Solche Lösungen der Spieleinstellung bedeuten jedoch einen Zuwachs sowohl an der Materialseite, wie auch der finanziellen Seite. Der Nachteil solcher Lösung liegt sowohl in dem materiellen wie auch finanziellen Aufwand.

Eine gattungsgemäße Vorrichtung zur Befestigung eines Scheinwerfers ist aus FR 2 736 015 bekannt.

### Darstellung der Erfindung

Die Aufgabe wird durch eine aus der Verbindung des Frontendmoduls, des Scheinwerfers und der vorderen Stoßstange bestehende erfindungsgemäße Vorrichtung zur Befestigung eines Scheinwerfers gelöst, wobei das Frontendmodul ein Montagegehäuse mit einer Öffnung aufweist, durch die ein am Scheinwerferhalter ausgebildete Vormontageclip durchgeht, wobei durch das Montagegehäuse und den Vormontageclip ein am Stoßstangenhalter ausgebildete Arretierungszapfen durchgeht. Zur Herstellung der Verbindung ist die Öffnung des Montagegehäuses, das eine viereckige Form mit Arretierungselementen an den seitlichen Innenwänden und einen Arretierungsvorsprung an der oberen Innenwand aufweist, wobei der Vormontageclip seitliche Sicherungsclips aufweist, die einen Spreizkeil und eine Aussparung haben, wobei die Länge der Aussparung mit der Länge der Arretierungselemente identisch ist. Damit eine gegenseitige Einstellung und Fixierung einzelner Teile erzielt wird, hat der Arretierungszapfen die Form eines Pyramidenstumpfes, der seitliche Spreizflächen und einen oberen Sicherungsclip aufweist.

### Übersicht der Figuren der Zeichnungen

Die Erfindung wird näher anhand der Ausführungsbeispiele gemäß den beigefügten Zeichnungen erläutert, in denen die Fig. 1 in einer perspektivischen Frontansicht die einzelnen Teile in ihrem nichtmontierten Zustand, die Fig. 2 in einer perspektivischen Seitenansicht die einzelnen Teile in ihrem nichtmontierten Zustand, die Fig. 3 die Befestigung des Scheinwerfers in einem Schnitt in der Ebene X-Z (Seitenansicht) und die Fig. 4 die Befestigung des Scheinwerfers in einem Schnitt in der Ebene X-Y (Draufsicht) darstellt.

### Ausführungsbeispiel der Erfindung

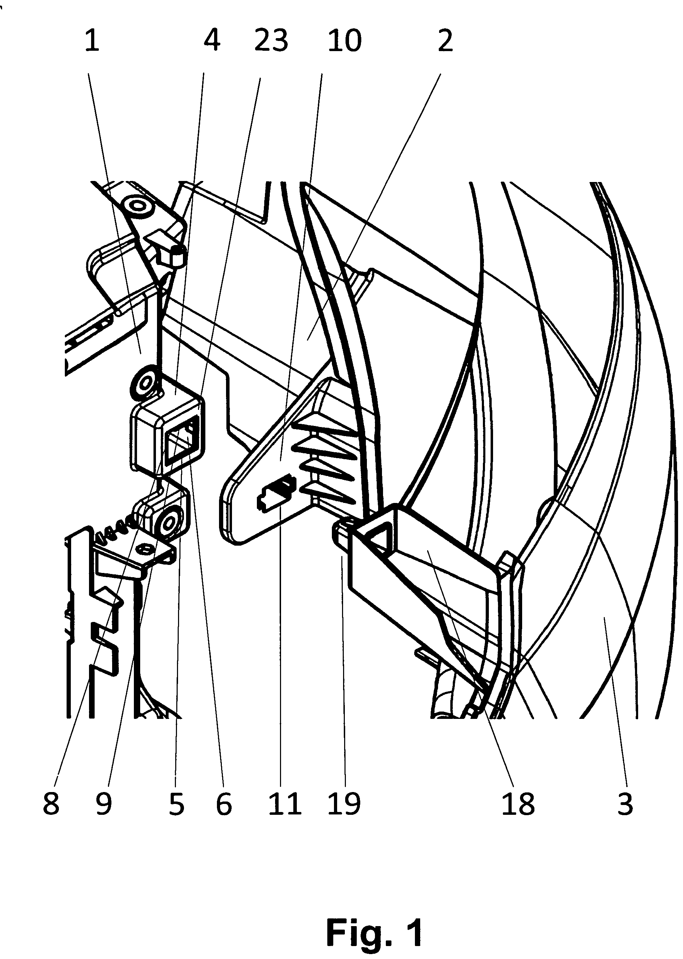

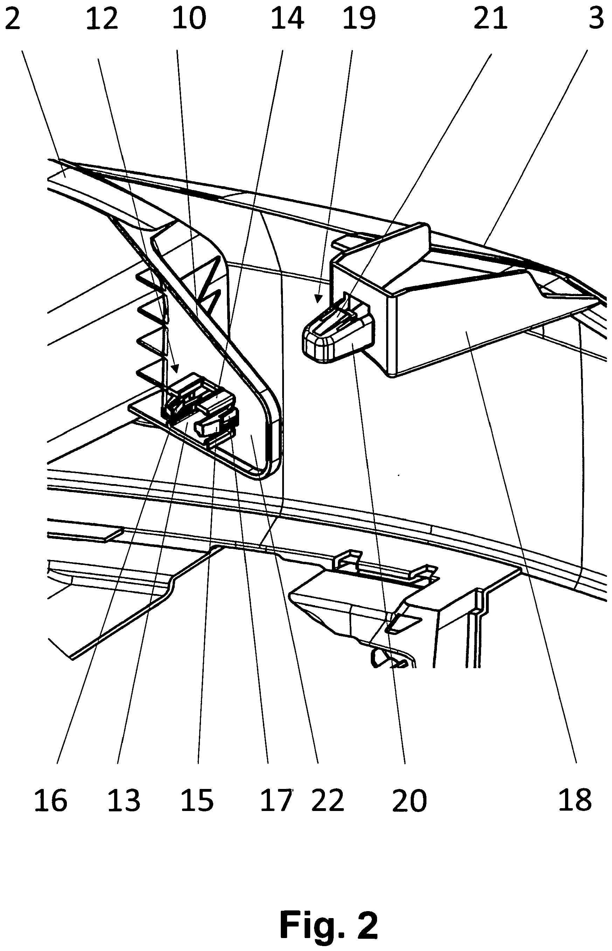

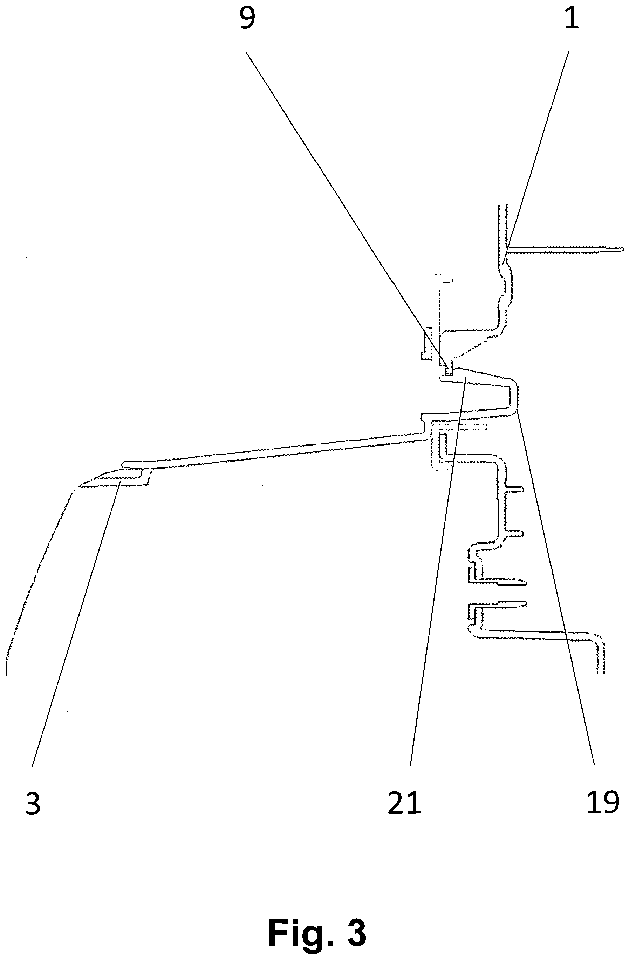

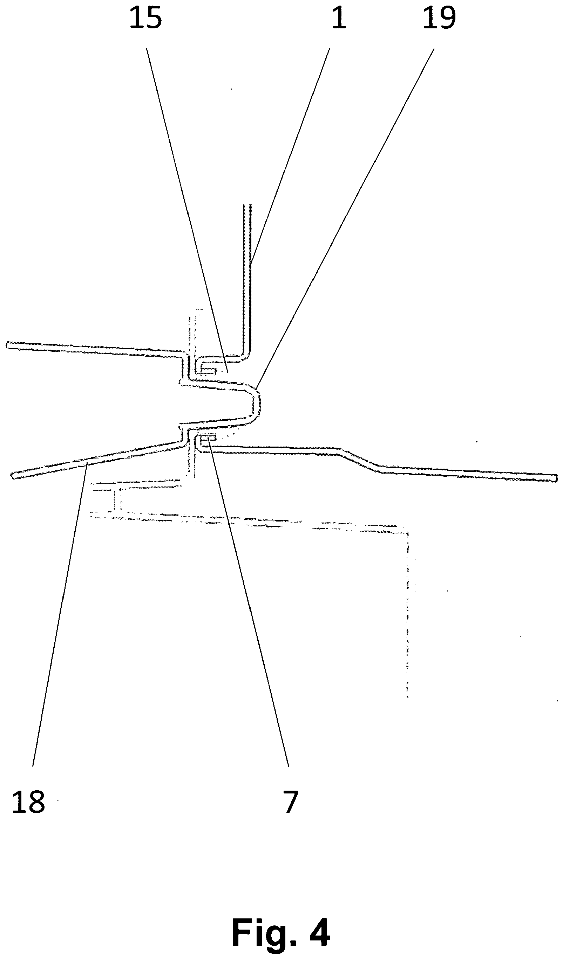

In der Fig. 1, 2 sind in einer perspektivischen Ansicht die Teile des Vorderwagens dargestellt, bestehend aus dem Frontendmodul 1, dem Scheinwerfer 2 und vorderer Stoßstange 3, welche für eine stabile Befestigung des Scheinwerfers 2 ausgestaltet sind. Am Frontendmodul 1 ist ein Montagegehäuse 4 ausgebildet, in dem sich eine Montageöffnung 5 vorteilhaft mit einer viereckigen Form befindet. Wie aus der Fig. 4 zu entnehmen ist, weisen die seitlichen Innenwände 6 die Arretierungselemente 7 und die obere Innenwand 8 einen Arretierungsvorsprung 9 (s. Fig. 3) auf. Am Scheinwerfer 2 ist ein Scheinwerferhalter 10 ausgestaltet, in dem eine viereckige Öffnung 11 und weiter seitlich entgegen der Fahrtrichtung ein Vormontageclip 12 ausgebildet ist. Dieser besteht aus einem unteren Führungselement 13, einem Paar der oberen Führungselemente 14 und den seitlichen Sicherungsclips 15. Jeder seitlicher Sicherungsclip 15 weist einen Spreizkeil 16 auf. Die seitlichen Sicherungsclips 15 weisen eine Aussparung 17 auf, wobei die Länge der Aussparung 17 mit der Länge der Arretierungselemente 7 identisch ist. Die vordere Stoßstange 3 weist einen Stoßstangenhalter 18 auf, an dem ein Arretierungszapfen 19 ausgebildet ist, der als ein Pyramidenstumpf ausgestaltet ist und dessen Form mit der Form der Öffnung 11 im Scheinwerferhalter 10 übereinstimmt. Der Arretierungszapfen 19 weist seitliche Spreizflächen 20 und im oberen Abschnitt einen oberen Sicherungsclip 21 auf.

Die eigentliche Montage des Scheinwerfers 2 erfolgt in zwei Schritten. Im ersten Schritt wird der Scheinwerfer 2 sowohl an der linken wie auch an der rechten Seite des Frontendmoduls 1 derart vormontiert, dass der Vormontageclip 12 in die Montageöffnung 5 des Montagegehäuse 4 so eingesteckt wird, damit die Fläche 22 des Scheinwerferhalters 2 auf die Stirnseite 23 des Montagegehäuses 4 aufsetzt. Die gegenseitige Position des Frontendmoduls 1 und des Scheinwerfers 2 wird weiter durch den unteren Führungselement 13 und die oberen Führungselemente 14 bestimmt. In dieser Position überlappen sich die Aussparungen 17 der seitlichen Sicherungsclips 15 mit den Arretierungselementen 7, welche an den seitlichen Innenwänden 6 des Montagegehäuses 4 angeordnet sind. Danach folgt der zweite Schritt, in dem auf das Frontendmodul 1 die vordere Stoßstange 3 aufgesetzt wird. Die Arretierungszapfen 19 werden in die Öffnungen 11 der Scheinwerferhalter 10 eingesetzt, sodass die seitlichen Spreizflächen 20 auf die Spreizkeile 16 aufsetzen. Durch weitere Bewegung der vorderen Stoßstange 3 in der Richtung der Fahrzeugachse werden durch die Einwirkung der seitlichen Spreizflächen 20 auf die Spreizkeile 16 die seitlichen Sicherungsclips 15 weggedrückt, sodass in deren Aussparungen 17 die Arretierungselemente 7 an den seitlichen Innenwänden 6 des Montagegehäuse 4 eingreifen. Gleichzeitig greift der Arretierungsvorsprung 9 in den oberen Sicherungsclip 21 ein. Dadurch werden das Frontendmodul 1, der Scheinwerfer 2 und die vordere Stoßstange 3 gegenseitig fixiert und alle drei Teile gegenseitig ausgerichtet.

Zur Montage des Scheinwerfers 2 werden keine Spezialwerkzeuge gebraucht und die Demontage wird unter Verwendung eines üblichen Werkzeugs, z.B. Schraubenzieher durchgeführt. Die Verbindung kann wiederholt zusammenmontiert und zerlegt werden.

Die Fixierung der weiteren, für eine sichere Ausrichtung des Scheinwerfers 2 notwendigen zwei Punkte wird klassisch als eine Schraubverbindung ausgeführt (nicht dargestellt).

### Bezugszeichenliste

- 1: Frontendmodul
- 2: Scheinwerfer
- 3: vordere Stoßstange
- 4: Montagegehäuse
- 5: Montageöffnung
- 6: seitliche Innenwand
- 7: Arretierungselement
- 8: obere Innenwand
- 9: Arretierungsvorsprung
- 10: Scheinwerferhalter
- 11: Öffnung
- 12: Vormontageclip
- 13: unteres Führungselement
- 14: oberes Führungselement
- 15: seitlicher Sicherungsclip
- 16: Spreizkeil
- 17: Aussparung
- 18: Stoßfängerhalter
- 19: Arretierungszapfen
- 20: seitliche Spreizfläche
- 21: oberer Sicherungsclip
- 22: Fläche des Halters
- 23: Stirnseite

## Patentansprüche

1. Vorrichtung zur Befestigung eines Scheinwerfers, insbesondere eines Kraftfahrzeuges, bestehend aus einem Frontendmodul (1), einem Scheinwerfer (2) und einer vorderen Stoßstange (3), wo der Scheinwerfer (2) einen Scheinwerferhalter (10) und die vordere Stoßstange (3) einen Stoßstangenhalter (18) aufweisen, **dadurch gekennzeichnet, dass** das Frontendmodul (1) ein Montagegehäuse (4) mit einer Montageöffnung (5) aufweist, durch die ein Vormontageclip (12) durchgeht, der an dem Scheinwerferhalter (10) ausgebildet ist, wobei durch das Montagegehäuse (4) und den Vormontageclip (12) ein Arretierungszapfen (19) durchgeht, der am Stoßstangenhalter (18) ausgebildet ist.

2. Vorrichtung zur Befestigung eines Scheinwerfers nach Anspruch 1, **dadurch gekennzeichnet, dass** die eine viereckige Form aufweisende Montageöffnung (5) des Montagegehäuses (4) an seitlichen Innenwänden (6) Arretierungselemente (7) und an einer oberen Innenwand (8) einen Arretierungsvorsprung (9) aufweist.

3. Vorrichtung zur Befestigung eines Scheinwerfers nach Anspruch 2, **dadurch gekennzeichnet, dass** der Vormontageclip (12) seitliche Sicherungsclips (15) aufweist, die einen Spreizkeil (16) und eine Aussparung (17) haben, wobei die Länge der Aussparung (17) mit der Länge der Arretierungselemente (7) identisch ist.

4. Vorrichtung zur Befestigung eines Scheinwerfers nach 1, **dadurch gekennzeichnet, dass** der Arretierungszapfen (19) in Form eines Pyramidenstumpfes seitliche Spreizflächen (20) und einen oberen Sicherungsclip (21) aufweist.

## Claims

1. A device for fastening a headlamp, in particular of a motor vehicle, consisting of a front end module (1), a headlamp (2) and a front bumper (3) where the headlamp (2) has a headlamp holder (10) and the front bumper (3) has a bumper holder 18), **characterized in that** the front end module (1) has an assembly housing (4) with an assembly opening (5), through which a pre-assembly clip (12) passes, which is formed on the headlamp holder (10), wherein through the assembly housing (4) and the pre-assembly clip (12) a locking pin passes, which is formed on the bumper holder (18).

2. A device for fastening a headlamp according to Claim 1, **characterized in that** the assembly opening (5) of the assembly housing (4) having a quadrangular form has locking elements (7) on lateral walls (6) and a locking projection (9) on an upper inner wall (8).

3. A device for fastening a headlamp according to Claim 2, **characterized in that** the pre-assembly clip (12) has lateral securing clips (15), which have an expanding wedge (16) and a recess (17), wherein the length of the recess (17) is identical with the length of the locking elements (7).

4. A device for fastening a headlamp according to Claim 1, **characterized in that** the locking pin (19) in the form of a truncated pyramid has lateral expanding surfaces (20) and an upper securing clip (21).

## Revendications

1. Dispositif de fixation d'un phare, plus particulièrement d'un phare de véhicule à moteur, constitué d'un module frontale (1), d'un phare (2) et d'un pare-chocs avant (3), dans lequel le phare (2) comprend un support de phare (10) et le pare-chocs avant (3) comprend un support de pare-chocs (18), **caractérisé en ce que** le module frontal (1) comprend un boîtier de montage (4) avec une ouverture de montage (5), qui traverse un clip de prémontage (12), qui est prévu sur le support de phare (10), un axe de blocage (19), prévu sur le support de pare-chocs (18), traversant le boîtier de montage (4) et le clip de prémontage (12).

2. Dispositif de fixation d'un phare selon la revendication 1, **caractérisé en ce que** l'ouverture de montage (5) du boîtier de montage (4) présentant une la forme quadrangulaire comprend, sur des parois internes latérales (6), des éléments de blocage (7) et, sur une paroi interne supérieure (8), une saillie de blocage (9).

3. Dispositif de fixation d'un phare selon la revendication 2, **caractérisé en ce que** le clip de prémontage (12) comprend des clips de fixation latéraux (15) qui comprennent une cale d'écartement (16) et un évidement (17), la longueur de l'évidement (17) étant identique à la longueur des éléments de blocage (7).

4. Dispositif de fixation d'un phare selon la revendication 1, **caractérisé en ce que** l'axe de blocage (19) comprend, sous la forme d'une pyramide tronquée, des surfaces d'écartement latérales (20) et un clip de fixation supérieur (21).
